# EUROPEAN PATENT APPLICATION

(11) **EP 1 562 363 A1**
(43) Date of publication of application: **10.08.2005**
(21) Application number: 05100697.1
(22) Date of filing: 01.02.2005
(51) Int. Cl.: H04N 1/21

(54) **Apparatus and method for signaling an imminent auto-exposure on a digital camera**

(30) Priority: 05.02.2004 US 772627
(71) Applicant: TEXAS INSTRUMENTS INCORPORATED, Dallas, TX 75265 (US)
(72) Inventor: DeMoor, Robert G., Sugar Land, TX Texas TX 77478 (US)
(74) Representative: Holt, Michael

(57) **Abstract**

In a digital camera 20 having a rotatable image display 16, when the camera is placed in an auto-exposure mode, the rotatable image display 16 is positioned to face toward the exposure subjects. In the auto-exposure mode and after the exposure switch 11 is activated, the image display 16 provides a periodic count-down sequence such that an imminent shutter release is identified for the exposure subjects 21.

## Description

### 1. Field of the Invention

This invention relates to digital cameras and, more particularly, to apparatus for capturing an improved image by a digital camera.

### 2. Background of the Invention

The use of digital cameras has been increasing in the past few years. The conveniences of reviewing an image before committing the image to storage as well as the ability to download images over the internet are a few of the features that are particularly attractive to camera operators.

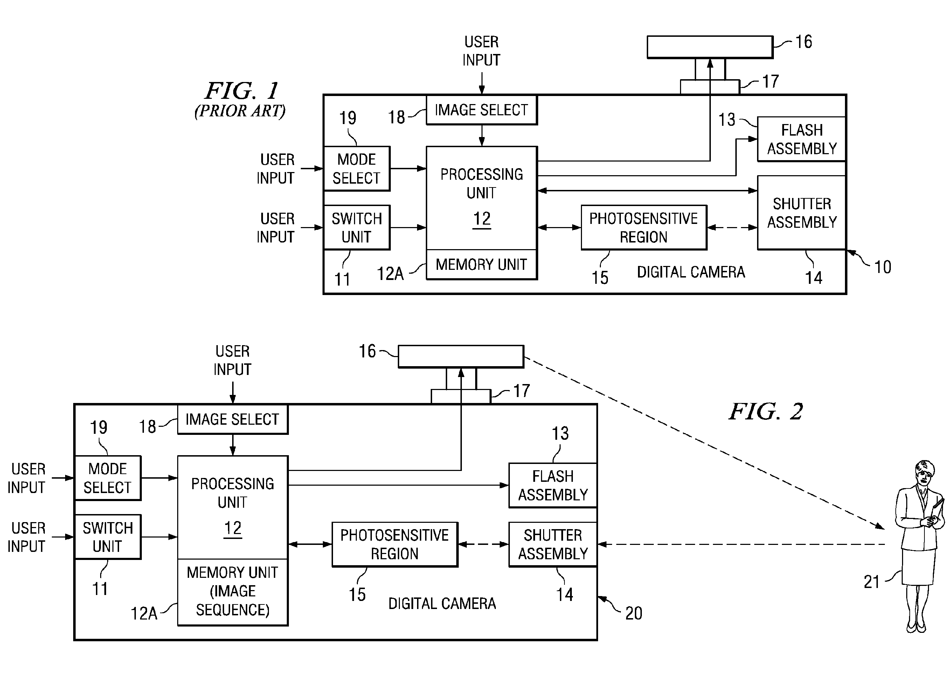

Referring to Fig. 1, a diagram illustrating the components of a digital camera 10, according to the prior art, is shown. The operation of the digital camera can be understood as follows. A user activates switch 11 in order to acquire a photographic image. The switch 11 applies an activation signal to processing unit 12. For a relatively simple digital camera, the processing unit 12 will provide the proper conditions for photo-sensitive region 15 to acquire an image, will activate the flash assembly 13, and will activate the shutter assembly 14. Activation of the shutter assembly 14 will cause an optical image to be applied to the photo-sensitive region 15. After the image has been applied to the photo-sensitive region 15, the image is converted into logic signals and is processed by the processing unit 12. In more complex systems, the external illumination level can be monitored and the processing unit 12 can control the time in which the photo sensitive region is illuminated by the subject. The digital camera further includes a display 16. This display 16 is used to display an image captured by the digital camera 10, the image being displayed in response to the to user input to the image select 18. After viewing, the user can then erase the image from the processing unit 12 or, if the image is acceptable, store the image in the memory 12A associated with the processing unit 12 for later disposition.

In addition, a digital camera typically includes a mode select switch 19 to activate an auto-exposure of the image. The auto-exposure mode involves a delayed activation of the image acquisition, i.e., delayed activation the shutter, the photo-sensitive surface, and the flash assembly. The purpose of the auto-exposure mode is to permit the operator of the camera to become part of the image by utilizing the delay in the image acquisition along with the auto-activation.

While the auto-exposure has been widely used feature, some problems have remained. In particular, the determination of the precise moment of activation has been problematic. The digital cameras in the past have provided a flashing light to indicate when the auto-activation is about to take place. However, the flashing light has not proven satisfactory for permitting the subjects of an auto-exposure to anticipate when the image acquisition is about to take place.

A need has therefore been felt for apparatus and an associated method having the feature that the subjects whose image is to be captured in an auto-activation of a digital camera will be able to anticipate the moment of activation. It would be a further feature of the apparatus and associated method to provide a count-down such that the moment of auto-activation of the camera will be evident to the image subjects. It would be yet another feature of the apparatus and associated method to utilize the digital camera display to provide a sequence of images that are displayed periodically and that permit the image subjects to anticipate the actual auto-acquisition of the image by a digital camera in the auto-exposure mode. It would be yet another feature of the apparatus and associated method to such that the last image of the sequence is displayed just prior to the auto-exposure of the digital camera. It would be a more particular feature of the apparatus and associated method to permit the digital camera display to be positioned such that images displayed thereon are visible to the subject images.

### Summary of the Invention

The aforementioned and other features are accomplished, according to the present invention, by storing in the memory unit associated with the processing unit of the digital camera, a sequence of images. When the auto-exposure mode is activated on the digital camera, the sequence of images are withdrawn from the memory unit and applied periodically to the display. The display is positioned to be visible to the image subjects. The sequence of images is timed to end just prior to the auto-activation. In addition, the images are selected to be in an order permitting the image subjects to be able to anticipate the time of the auto-exposure.

Other features and advantages of the present invention will be more clearly understood upon reading of the following description and the accompanying drawings and claims.

### Brief Description of the Drawings

Figure 1 is diagram of a digital camera according to the prior art.
Figure 2 is diagram of a digital camera according to the present invention.

### Description of the Preferred Embodiment

### 1. Detailed Description of the Drawings

Fig. 1 has been described with respect to the related art.

Referring to Fig. 2, a diagram of the digital camera 20 according to the present invention is shown. In this embodiment of a digital camera, a sequence of images is stored in a memory portion 12A associated with the processing unit 12. The image sequence is applied to display 16. Display 16 has been positioned to facing the image subject(s) 21. The sequence of images forms a count-down sequence that permits the image subject(s) 21 in an auto-activation mode to anticipate the moment of automatic exposure. The number of images in the image sequence and the time between images are selected to permit the image subject to estimate, at the end of the sequence, when the shutter will be activated and the image of the image subjects acquired.

### 2. Operation of the Preferred Embodiment

In the present invention, the image subjects of an automatic exposure mode of operation can determine relatively precisely when the exposure is activated. In the past, the moment of shutter activation has been difficult to ascertain. Image subjects frequently look unprepared when the acquired image is processed. The present invention addresses this problem by providing an unambiguous count-down, culminating in shutter activation. For example, the image on the display may be a number count down, the exposure occurring the same time period after the display of the number "1" as the time period between each of the sequence of images. The sequence of images can also be a sequence of color images, the final color or color images indicating the imminent activation of the shutter. Or according to another embodiment of the sequence of images, the amounts of dark and bright area of the displayed images can systematically varied provide an indication of impending shutter activation.

As will be clear, the delayed activation of the shutter and the time between each of the images of the image sequence can be controlled by the clock of the processing unit.

Described embodiments include a digital camera having a processing unit, a shutter, a photosensitive region, and a display unit. The processing unit may include a memory unit which stores a sequence of images. The shutter may be activated in response to signals from the processing unit. The photosensitive region may receive an image when the shutter is activated, with the image on the shutter being stored in the memory unit. The display unit serves to display images stored in the memory unit.

The camera may have a first mode of operation in which the shutter is activated for a preselected period of time in response to user input, so that the sequence of images is displayed on the display during the preselected period of time, and the display is visible to image subjects. The sequence of images may be applied periodically to the display and may provide a visual count-down for the activation of the shutter. The camera display may be configured to be rotatable or otherwise made visible to the image subjects in the first mode of operation. The camera may also have a second mode of operation, wherein the shutter is activated immediately in response to user input.

An embodiment of method of acquiring an image with a digital camera, provides delayed activation of the shutter for a predetermined period of time in response to a first user input signal. During the predetermined period of time for delayed actuation, a sequence of images on the camera display may be made viewable to the image subjects. The sequence of images may provide a count-down for the activation of the digital camera shutter. A second mode of operation may be included that provides activation of the shutter without delay, in response to a second user input signal.

A modified embodiment provides a digital camera having an auto-exposure mode and a normal mode of operation. The camera includes a processing unit with a memory unit, a shutter unit,
a photo-sensitive region, and a positionable display, as described. The display may acquire an image in response to a first user input, and display a sequence of images to image subjects prior to activation of the shutter after a preselected period of time in response to a second user input. In such case, a third user input may provide a mode of activation of the shutter without delay. The sequence of images may be displayed periodically and permit the image subjects to anticipate the activation of the delayed shutter. The image sequence may be a series of numbers. Activation of an optional flash assembly may be coordinated with activation of the shutter.

While the invention has been described with respect to the embodiments set forth above, the invention is not necessarily limited to these embodiments. Accordingly, other embodiment variations, and improvements not described herein, are not necessarily excluded from the scope of the invention, the scope of the invention being defined by the following claims.

## Claims

1. A digital camera comprising;
a processing unit, the processing unit including a memory unit, the memory unit storing a sequence of images;
a shutter, the shutter being activated in response to signals from the processing unit
a photosensitive region for receiving an image when the shutter is activated, the image on the shutter being stored in the memory unit; and
a display unit for displaying images stored in the memory unit;
wherein the digital camera has a first mode of operation in which the shutter is activated a preselected period of time in response to a first user input, the sequence of images being displayed on the display during the preselected period of time, the display being visible to image subjects.

2. The digital camera as recited in claim 1, wherein the sequence of images provides a visual count-down for the activation of the shutter.

3. The digital camera as recited in claim 1 or 2, wherein the digital camera has a second mode of operation, the shutter being activated immediately in response to the second user input.

4. The digital camera as recited in any of claims 1 - 3, wherein the display is rotatable, the display being rotated to face the image subjects in the first mode of operation.

5. The digital camera as recited in any of claims 1 -4, wherein the sequence of images is a series of numbers.

6. A method of acquiring an image with a digital camera, the method comprising:
after a first user input signal, delaying activation of the shutter for a predetermined period of time; and
during the predetermined period of time, displaying a sequence of images to the subject images on the camera display.

7. The method as recited in claim 6, wherein the sequence of signals provides a count-down for the activation of the digital camera shutter.

8. The method as recited in claim 6 or 7, wherein the digital camera includes a second mode of operation, the shutter being activated without delay by a user input in the second mode of operation.
